# EUROPEAN PATENT SPECIFICATION

(11) **EP 3 741 729 B1**
(45) Date of publication and mention of the grant of the patent: **24.01.2024**
(21) Application number: 18901296.6
(22) Date of filing: 27.08.2018
(51) Int. Cl.: C02F 11/12, C02F 11/06, C04B 7/44, C04B 7/40, C04B 7/47

(54) **SLUDGE TREATMENT METHOD AND CEMENT PRODUCTION SYSTEM**
VERFAHREN ZUR BEHANDLUNG VON SCHLAMM UND ZEMENTHERSTELLUNGSSYSTEM
PROCÉDÉ DE TRAITEMENT DE BOUES ET SYSTÈME DE FABRICATION DE CIMENT

(30) Priority: 18.01.2018 JP 2018006471
(43) Date of publication of application: 25.11.2020
(73) Proprietor: Kawasaki Jukogyo Kabushiki Kaisha, Hyogo 650-8670 (JP)
(72) Inventor: ANDO, Fuminori, Kobe-shi, Hyogo 650-8670 (JP); IKEDA, Koki, Kobe-shi, Hyogo 650-8670 (JP); YOSHINAGA, Akihiro, Kobe-shi, Hyogo 650-8670 (JP); MURAOKA, Toshinori, Kobe-shi, Hyogo 650-8670 (JP)
(74) Representative: Leinweber & Zimmermann
(86) International application number: PCT/JP2018/031591
(87) International publication number: WO 2019/142387

(56) References cited:
- EP-A1- 2 631 220
- EP-B1- 0 701 539
- EP-B1- 2 786 974
- WO-A1-2008/001746
- JP-A- H11 116 290
- JP-A- 2006 035 189
- JP-A- 2006 175 355
- JP-A- 2007 260 654
- JP-A- 2010 163 509
- JP-A- 2014 033 997
- JP-A- 2015 208 716
- JP-B2- 4 445 147
- US-B2- 9 399 592

## Description

### Technical Field

The present invention relates to a sludge treatment method that utilizes exhaust heat from a cement production process and to a cement production system that utilizes sludge.

### Background Art

A cement production process is roughly categorized into the following steps: a raw meal step of drying, grinding, and preparing cement raw meal; a pyroprocessing step of pyroprocessing the cement raw meal to form clinker, which is an intermediate product; and a finishing step of grinding the clinker with gypsum added thereto, consequently obtaining cement. It has been proposed to use sludge combustion heat as thermal energy in the cement production process, the sludge combustion heat being generated from combusting, for example, sewage sludge or industrial wastewater sludge, and also to use the resulting combustion ash as cement raw meal. Patent Literatures 1 to 3 each disclose a sludge utilization technique in cement production.

Patent Literature 1 describes: mixing sewage sludge with quicklime and dehydrating the mixture; feeding a solid content resulting from the dehydration into the raw meal step of cement production (e.g., into a raw meal dryer or raw meal mill); producing cement from the solid content together with other cement raw meal; and introducing gas resulting from the dehydration into the pyroprocessing step (e.g., into the back end of a cement kiln), in which malodorous gas is decomposed.

Patent Literature 2 describes: mixing coal ash into, for example, sewage sludge or industrial wastewater sludge; treating the mixture to adjust the moisture content therein and prevent malodor generation therefrom; then drying the mixture in a cement raw meal dryer; and using the dried mixture as cement raw meal.

Patent Literature 3 describes: bringing sludge into contact with cement raw meal that mainly contains limestone in a relatively low-temperature region (400°C or lower), for example, in a cement raw meal drying step and/or a cement raw meal grinding step, thereby removing odor from the sludge; and then supplying the sludge and the cement raw meal into a pyroprocessing step. Exhaust gas (200 to 400°C) from a kiln, which is generated in the pyroprocessing step, is introduced into a raw meal dryer through a precalciner.

EP0701539B1 describes: mixing sludge with cement raw meal and introducing the mixture to a dryer crusher, wherein the dryer crusher is supplied with drying gas coming from the cement pyro-process equipment.

### Citation List

### Patent Literature

PTL 1: Japanese Laid-Open Patent Application Publication No. H03-98700
PTL 2: Japanese Laid-Open Patent Application Publication No. H06-335700
PTL 3: Japanese Laid-Open Patent Application Publication No. H11-116290

### Summary of Invention

### Technical Problem

In a cement production process, a high-temperature pyroprocessed product exiting from cement pyro-process equipment is rapidly cooled by an air quenching cooler. In the air quenching cooler, cool air is fed to the high-temperature pyroprocessed product to rapidly cool it down, and thereby clinker is obtained. Part of gas discharged from the air quenching cooler is used as combustion air in a kiln and a precalciner. After being used as the combustion air, the gas is used by, for example, a power boiler or a raw meal mill for grinding/drying cement raw meal. As a result, the temperature of the gas decreases to less than about 200°C. Other part of the gas discharged from the air quenching cooler is not used as the combustion air in the kiln and the precalciner, but used by, for example, the power boiler. As a result, the temperature of the gas decreases to less than about 200°C. Such low-temperature exhaust heat is released to the atmosphere. However, if the low-temperature exhaust heat, which has been thus discarded in the conventional art, can be utilized as energy, efficient utilization of heat in the cement production process can be further enhanced.

The present invention has been made in view of the above, and an object of the present invention is to utilize the low-temperature (e.g., lower than 200°C) exhaust heat from the cement production process, which has been discarded in the conventional art, to dry dehydrated sludge.

### Solution to Problem

Patent Literatures 1 to 3 describe drying a mixture of sludge and quicklime, a mixture of sludge and coal ash, or a mixture of sludge and cement raw meal by using a cement raw meal dryer or a cement raw meal mill. Conventional cement raw meal dryers or cement raw meal mills utilize exhaust gas of 200 to 400°C from the pyroprocessing step (see Patent Literature 3). On the other hand, in order to efficiently dry sludge having a high moisture content by utilizing exhaust gas having a lower temperature than 200 to 400°C, the present invention has the features described below.

A sludge treatment method according to one aspect of the present invention includes: preparing a mixture by mixing dehydrated sludge and cement raw meal; drying the mixture by a dryer that brings the mixture into contact with drying gas; supplying the dried mixture to a pyroprocessing step of a cement production process as a fuel and raw meal; supplying exhaust gas from the dryer to the pyroprocessing step as cooling gas for cooling a pyroprocessed product; and supplying the drying gas to the dryer, the drying gas being either exhaust gas from the cement production process or exhaust gas from a process that utilizes heat thereof, the drying gas having a temperature of not lower than 50°C but lower than 200°C.

A cement production system according to one aspect of the present invention includes: cement pyro-process equipment that pyroprocesses cement raw meal; an air quenching cooler that cools a pyroprocessed product exiting from the cement pyro-process equipment; mixing equipment that prepares a mixture by mixing dehydrated sludge and the cement raw meal that has not been pyroprocessed; a dryer that brings the mixture into contact with drying gas to dry the mixture; a drying gas supply line that supplies the drying gas to the dryer, the drying gas being either exhaust gas from at least one of the cement pyro-process equipment and the air quenching cooler or exhaust gas from an apparatus that utilizes heat thereof, the drying gas having a temperature of not lower than 50°C but lower than 200°C; a mixture supply line that supplies the dried mixture to the cement pyro-process equipment as a fuel and raw meal; and a dryer exhaust gas line that supplies exhaust gas from the dryer to the air quenching cooler as cooling gas for cooling the pyroprocessed product.

According to the above sludge treatment method and cement production system, the dehydrated sludge is mixed with the cement raw meal to form the mixture. As a result, the drying gas and the mixture come into contact with each other efficiently, and even with the use of the low-temperature drying gas having a temperature of not lower than 50°C but lower than 200°C, the mixture containing the dehydrated sludge can be dried favorably. Moreover, according to the above sludge treatment method and cement production system, the odorous exhaust gas from the dryer is used in the air quenching cooler as the cooling gas for cooling the pyroprocessed product. After cooling the pyroprocessed product, the exhaust gas from the dryer is further used as combustion air in the cement pyro-process equipment. As a result, the odor of the exhaust gas is pyrolyzed. Therefore, it is not necessary to install a separate deodorizing device for treating the odorous exhaust gas from the dryer. Furthermore, the drying gas is in the temperature condition of not higher than the ignition point of sulfur compounds that are generated from the sludge during the drying. This makes it possible to suppress the generation of sulfur dioxide (sulfurous acid gas) during the drying. Consequently, corrosion of the dryer and its exhaust gas line due to sulfuric acid, which is generated as a result of oxidization and condensation of sulfur dioxide, can be suppressed. Similarly, owing to the aforementioned temperature condition of the drying gas, corrosion of the dryer and its exhaust gas line due to hydrogen sulfide, which is generated from the sludge, can be suppressed.

In the above sludge treatment method, the drying gas may be either the cooling gas that has been used for cooling the pyroprocessed product or the exhaust gas from the process that utilizes the heat thereof.

According to the above configuration, the gas taken out of the pyroprocessed product cooling means (the air quenching cooler) as the drying gas is returned to the pyroprocessed product cooling means. This makes it possible to keep the gas balance in the cement production process, and thereby stable operation is realized.

In the above sludge treatment method, the dryer is a fluidized bed dryer, in which the mixture serves as a fluidized medium and the drying gas serves as a fluidizing gas that fluidizes the fluidized medium. The dehydrated sludge and the cement raw meal are mixed at such a mixture ratio that the resulting mixture is a granular mixture having a total moisture content of not less than 10% by mass and not greater than 25% by mass.

In the above cement production system, the dryer is a fluidized bed dryer including a dryer casing that accommodates a fluidized medium made of the mixture and to which the drying gas supply line is connected, the drying gas supply line feeding the drying gas as fluidizing gas into the fluidized medium. The dehydrated sludge and the cement raw meal are mixed at such a mixture ratio that the resulting mixture is a granular mixture having a total moisture content of not less than 10% by mass and not greater than 25% by mass, the mixture ratio being a mass ratio, or a volume ratio, of the dehydrated sludge and the cement raw meal.

As described above, the fluidized bed dryer, which has high drying efficiency, is used as the dryer. Therefore, the mixture can be dried favorably even with the use of low-temperature drying gas. Moreover, by mixing the dehydrated sludge and the cement raw meal at the above ratio, a granular mixture with a small grain size distribution and with a suitable average grain diameter for the mixture to serve as a fluidized medium can be obtained.

The sludge treatment method may further include: extracting high-temperature gas having a temperature of not lower than 200°C and not higher than 400°C from the pyroprocessing step of the cement production process; and indirectly heating the fluidized medium in the fluidized bed dryer by using the extracted high-temperature gas.

In the above cement production system, the dryer may include at least one heat transfer pipe that extends through an inside of the fluidized medium. The cement production system may further include a high-temperature gas supply line that extracts high-temperature gas having a temperature of not lower than 200°C and not higher than 400°C from at least one of an exhaust gas line of the cement pyro-process equipment and the air quenching cooler and feeds the extracted high-temperature gas to the heat transfer pipe.

According to the above sludge treatment method and cement production system, the fluidized medium in the dryer can be indirectly heated by using the high-temperature gas taken out of the pyroprocessing step of the cement production process, the high-temperature gas having a temperature of not lower than 200°C and not higher than 400°C. In this manner, the drying of the fluidized medium (the mixture) by using the fluidizing gas having a relatively low temperature can be assisted. Moreover, the fluidizing gas having a relatively low temperature and the high-temperature gas are separated from each other, which makes it possible to recover more heat from the high-temperature gas that has passed through the dryer.

The above sludge treatment method may further include causing the high-temperature gas that has been used for heating the fluidized medium in the fluidized bed dryer to pass through an exhaust heat recovery steam generator and then merge with the drying gas.

Similarly, the above cement production system may further include: an exhaust heat recovery steam generator; and an exhaust heat recovery line that feeds the high-temperature gas exiting from the heat transfer pipe to the drying gas supply line through the exhaust heat recovery steam generator.

According to the above sludge treatment method and cement production system, the heat of the high-temperature gas that has been used for heating the fluidized medium in the dryer can be recovered by the exhaust heat recovery steam generator. In addition, since the high-temperature gas that has passed through the exhaust heat recovery steam generator can be used as the drying gas, the heat of the high-temperature gas can be utilized efficiently.

### Advantageous Effects of Invention

The present invention makes it possible to dry dehydrated sludge by utilizing low-temperature exhaust heat from a cement production process, i.e., by utilizing exhaust heat that has conventionally been discarded.

### Brief Description of Drawings

FIG. 1 shows a schematic system configuration of a cement production system according to Embodiment 1 of the present invention.
FIG. 2 shows a schematic system configuration of a cement production system according to one variation of Embodiment 1 of the present invention.
FIG. 3 shows a schematic system configuration of a cement production system which does not form part of the present invention.

### Description of Embodiments

### [Embodiment 1]

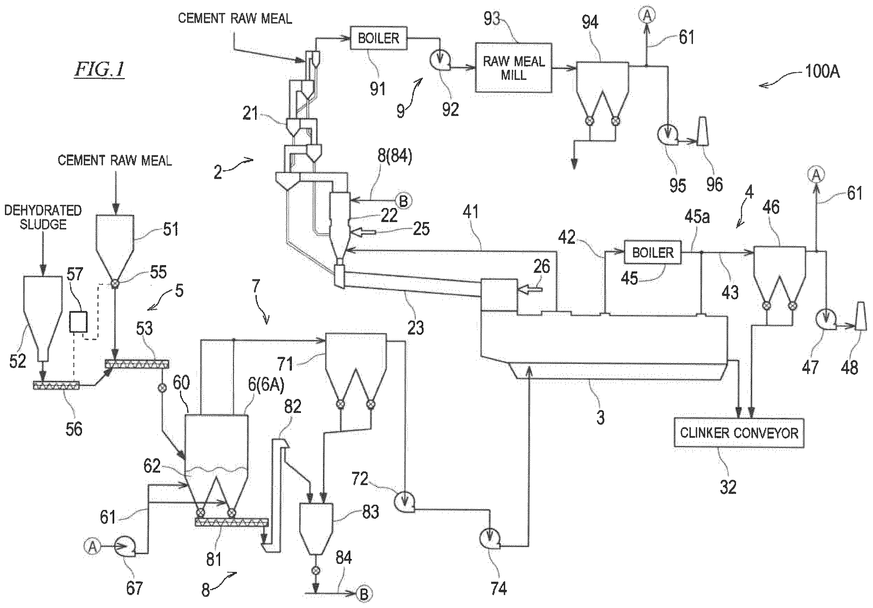

Next, Embodiment 1 of the present invention is described with reference to the drawings. FIG. 1 shows a schematic system configuration of a cement production system 100A according to Embodiment 1 of the present invention.

A cement production process is roughly categorized into the following steps: a raw meal step of drying, grinding, and preparing cement raw meal; a pyroprocessing step of pyroprocessing the cement raw meal to form clinker, which is an intermediate product; and a finishing step of grinding the clinker with gypsum added thereto, consequently obtaining cement. Regarding the cement production system 100A shown in FIG. 1, detailed descriptions are given of cement pyro-process equipment 2 and an air quenching cooler 3, which perform the pyroprocessing step, and the peripheral equipment thereof. The description of the remaining parts of the cement production system 100A is omitted.

The cement production system 100A includes: the cement pyro-process equipment 2, which pyroprocesses cement raw meal; and the air quenching cooler 3, which cools a pyroprocessed product exiting from the cement pyro-process equipment 2.

The cement pyro-process equipment 2 includes: a preheater 21 and a precalciner 22, which preheat the cement raw meal; and a rotary kiln 23, which pyroprocesses the preheated cement raw meal.

In the cement pyro-process equipment 2, the preheater 21, the precalciner 22, and the rotary kiln 23 communicate with each other, so that the cement raw meal moves through the preheater 21, the precalciner 22, and the rotary kiln 23 in this order. In the cement pyro-process equipment 2, high-temperature exhaust gas from the rotary kiln 23 flows through the precalciner 22 and the preheater 21 in this order. A pyro-process equipment exhaust gas line 9, through which exhaust gas from the cement pyro-process equipment 2 flows, is connected to the preheater 21. The pyro-process equipment exhaust gas line 9 is provided with a boiler 91, an exhaust fan 92, a raw meal mill 93, a dust collector 94, an exhaust fan 95, and a chimney 96, which are arranged in this order from the upstream side to the downstream side of the flow of the exhaust gas.

The preheater 21 includes multi-stage cyclone dust collectors that are connected in series. In the preheater 21, exhaust heat from the rotary kiln 23 is transferred through the multi-stage cyclone dust collectors sequentially from the lowermost cyclone dust collector to the uppermost cyclone dust collector, whereas the cement raw meal moves through the multi-stage cyclone dust collectors sequentially from the uppermost cyclone dust collector to the lowermost cyclone dust collector. The cement raw meal is heated by heat exchange as passing through the cyclone dust collectors.

The lowermost cyclone dust collector of the preheater 21 is connected to the precalciner 22. The outlet of the precalciner 22 is connected to the inlet of the rotary kiln 23. The precalciner 22 includes a precalciner burner 25. A tertiary air duct 41 and a mixture supply line 8 are connected to the precalciner 22. The tertiary air duct 41 feeds exhaust heat from the air quenching cooler 3 to the precalciner 22. The mixture supply line 8 feeds a mixture to the precalciner 22 as a fuel and raw meal. The mixture will be described below. In the precalciner 22, the cement raw meal exiting from the preheater 21 and the mixture supplied from the mixture supply line 8 are calcined in an atmosphere of about 900°C.

The rotary kiln 23 is a horizontally-long cylindrical rotating kiln. The rotary kiln 23 is installed in such a manner that the rotary kiln 23 is slightly sloped downward from the raw meal inlet thereof toward the raw meal outlet thereof. The rotary kiln 23 includes a kiln burner 26, which is positioned at the raw meal outlet side of the rotary kiln 23. In the rotary kiln 23, the cement raw meal that has been preheated and calcined by the preheater 21 and the precalciner 22 is pyroprocessed by using exhaust heat from the air quenching cooler 3 and combustion gas from the kiln burner 26.

The outlet of the rotary kiln 23 is connected to the inlet of the air quenching cooler 3. In the air quenching cooler 3, the high-temperature pyroprocessed product exiting from the rotary kiln 23 is brought into contact with cool air, and thereby the pyroprocessed product is rapidly cooled. As a result, clinker is obtained. The clinker exiting from the air quenching cooler 3 is fed to a clinker silo by a clinker conveyor 32.

A cooler exhaust heat line 4, into which the exhaust heat from the air quenching cooler 3 flows, is connected to the air quenching cooler 3. The cooler exhaust heat line 4 includes the aforementioned tertiary air duct 41, a high-temperature exhaust heat line 42, and a low-temperature exhaust heat line 43. The high-temperature exhaust heat line 42 extracts gas having a temperature of about 200°C or higher from the air quenching cooler 3. The low-temperature exhaust heat line 43 extracts gas having a temperature lower than about 200°C from the air quenching cooler 3.

The high-temperature exhaust heat line 42 is connected to a boiler 45. Exhaust gas from the air quenching cooler 3 is fed to the boiler 45 through the high-temperature exhaust heat line 42.

The low-temperature exhaust heat line 43 is provided with a dust collector 46, an exhaust fan 47, and a chimney 48, which are arranged in this order from the upstream side to the downstream side of the flow of the exhaust gas. In the present embodiment, an exhaust gas line 45a of the boiler 45 is connected to the low-temperature exhaust heat line 43 at a position upstream of the dust collector 46.

The cement production system 100A further includes: mixing equipment 5, which prepares a granular mixture by mixing dehydrated sludge and cement raw meal; a dryer 6, which dries the mixture by bringing the mixture into contact with drying gas; a dryer exhaust gas line 7, which feeds exhaust gas from the dryer 6 to the air quenching cooler 3; the mixture supply line 8, which feeds the dried mixture from the dryer 6 to the cement pyro-process equipment 2 (the precalciner 22); and a drying gas supply line 61, which supplies the drying gas to the dryer 6.

The mixing equipment 5 includes a cement raw meal hopper 51, a dehydrated sludge hopper 52, and a mixer 53. The mixer 53 mixes the cement raw meal and the dehydrated sludge together and feeds out the mixture.

Cement raw meal that has been dried, ground, and prepared in the raw meal step is fed into the cement raw meal hopper 51. The cement raw meal fed into the cement raw meal hopper 51 may be the same as the cement raw meal supplied to the cement pyro-process equipment 2. Known raw meal containing limestone as its main component is used as the cement raw meal without any particular restrictions. Generally speaking, specifically, the cement raw meal is prepared by blending limestone, which is a major component, with clay, silica stone, iron oxide, etc. As one example, the chemical composition of the cement raw meal contains 12 to 15% by mass of SiO₂, 3 to 4% by mass of Al₂O₃, 1.5 to 2.5% by mass of Fe₂O₃, 43 to 44% by mass of CaO, 0.6 to 0.9% by mass of MgO, 35 to 37% by mass of volatile components, and 0 to 1% by mass of other materials (remaining components).

Dehydrated sludge is fed into the dehydrated sludge hopper 52. The dehydrated sludge is a solid material (dehydrated cake) that results from dehydrating sludge by an unshown dehydrater. Examples of the sludge to be dehydrated include sewage sludge, industrial wastewater sludge, and activated sludge. Generally speaking, dehydrated sludge handled as the dehydrated cake contains 60 to 90% by mass of moisture.

The outlet of the cement raw meal hopper 51 is connected to the inlet of the mixer 53 via a cement raw meal adjusting feeder 55. The cement raw meal adjusting feeder 55 adjusts the amount of cement raw meal fed from the cement raw meal hopper 51 to the mixer 53. The outlet of the dehydrated sludge hopper 52 is connected to the inlet of the mixer 53 via a sludge adjusting feeder 56. The sludge adjusting feeder 56 adjusts the amount of dehydrated sludge fed from the dehydrated sludge hopper 52 to the mixer 53.

Operations of the cement raw meal adjusting feeder 55 and the sludge adjusting feeder 56 are controlled by a controller 57. The controller 57 adjusts a cement raw meal supply amount by means of the cement raw meal adjusting feeder 55, such that the mixture ratio of the dehydrated sludge and the cement raw meal in the mixer 53 is adjusted to a predetermined value. The controller 57 also adjusts a dehydrated sludge supply amount by means of the sludge adjusting feeder 56. The dehydrated sludge and the cement raw meal are mixed at such a mixture ratio that the resulting mixture is a granular mixture. The mixture ratio herein is a mass ratio, or a volume ratio, of the dehydrated sludge and the cement raw meal.

The mixture of the dehydrated sludge and the cement raw meal becomes granular without undergoing granulation treatment if the mixture ratio of the dehydrated sludge and the cement raw meal is within a particular range. The mixture ratio of the dehydrated sludge and the cement raw meal is not fixed, but varies depending on the properties of the dehydrated sludge (in particular, the free moisture content and the proportion of organic matter in the dehydrated sludge) and the properties of the cement raw meal (in particular, the moisture content and the composition of the cement raw meal). Therefore, it is desirable to set the mixture ratio of the dehydrated sludge and the cement raw meal each time any change in the properties of the dehydrated sludge and the cement raw meal has occurred. The range of the mixture ratio of the dehydrated sludge and the cement raw meal can be determined, for example, through tests.

In the present embodiment, a fluidized bed dryer 6A is adopted as the dryer 6. Accordingly, in this case, the dehydrated sludge and the cement raw meal are mixed at such a mixture ratio that the resulting mixture is suitably granular as a fluidized medium. Specifically, the mixture ratio of the dehydrated sludge and the cement raw meal is determined through tests such that the total moisture content of the mixture is not less than 10% by mass and not greater than 25% by mass, and desirably, not less than 13% by mass and not greater than 22% by mass. The mixture ratio thus determined is preset in the controller 57. The total moisture content of the mixture is the sum of the free moisture content and the inherent moisture content. The free moisture is the surface moisture of the mixture. The inherent moisture is the adsorbed moisture in the mixture. The total moisture content of the mixture was measured in accordance with a moisture content quantitative determination method intended for coals as defined in "JIS M 8812 Coal and coke - Methods for proximate analysis".

As a result of tests conducted by the present inventors, they have found that by setting the total moisture content of the mixture to not less than 10% by mass and not greater than 25% by mass, a granular mixture with a small grain size distribution (i.e., with small variation in grain diameter) and with a suitable average grain diameter for the mixture to serve as a fluidized medium can be obtained.

The above "suitable average grain diameter for the mixture to serve as a fluidized medium" means a grain diameter that allows the fluidized medium to be uniformly fluidized in a fluidized bed. Such an average grain diameter is considered to fall within a range from about several µm to 5 mm. As a result of the tests conducted by the inventors, the average grain diameter (median diameter d50) of the mixture having a total moisture content of not less than 10% by mass and not greater than 25% by mass was not less than 0.5 mm and not greater than 5 mm, i.e., a suitable average grain diameter for the mixture to serve as a fluidized medium. It should be noted the grain size distribution of the mixture was measured by using a standard sieve, and based on the measurement results, the average grain diameter was calculated.

The mixture prepared by mixing the dehydrated sludge and the cement raw meal in the mixer 53 is supplied to the dryer 6. A fluidized bed in which the mixture serves as a fluidized medium and the drying gas serves as fluidizing gas is formed in the dryer 6. The dryer 6 includes a dryer casing 60, in which a drying chamber is formed. The mixture that has accumulated at the bottom of the drying chamber forms a mixture bed 62. The drying gas supply line 61 is connected to the lower part of the dryer casing 60. The drying gas fed to the dryer 6 through the drying gas supply line 61 is injected into the mixture bed 62, and moves upward through the mixture bed 62. In this manner, the mixture and the drying gas come into contact with each other, and thereby the mixture is dried. Thus, since the fluidized bed dryer 6A, which has higher drying efficiency (i.e., higher volumetric heat exchanger effectiveness) than other types of dryers, is used as the dryer 6, the mixture can be dried favorably even with the use of low-temperature drying gas.

The air flow rate (flow velocity) of the drying gas supplied to the dryer 6 may be regulated by a flow regulator 67, such as a damper or a fan, in accordance with the properties (i.e., grain diameter, moisture content, density, etc.) of the mixture so that a proper fluidized state of the fluidized bed of the dryer 6 can be obtained.

In the present embodiment, exhaust gas from the cement production process, or exhaust gas from a process that utilizes the heat thereof, is used as the drying gas. The exhaust gas used as the drying gas has a temperature of not lower than 50°C but lower than 200°C. Exhaust heat with a temperature higher than or equal to 200° from the cement production process may be preferentially utilized in the raw meal mill 93, the boiler 45, and the boiler 91. Exhaust heat with a temperature lower than 50° from the cement production process may be discarded without being used since the use of such exhaust heat will significantly lower the drying efficiency of the dryer 6.

Specifically, a part of the low-temperature exhaust heat line 43 downstream of the dust collector 46 and upstream of the exhaust fan 47 is connected to the drying gas supply line 61. Exhaust gas with a temperature of lower than 200°C from the air quenching cooler 3 and/or exhaust gas with a temperature of lower than 200°C from the boiler 45, which utilizes the exhaust gas from the air quenching cooler 3, is/are supplied to the dryer 6 through the drying gas supply line 61. Since such exhaust gas is used as the drying gas, the drying gas taken out of the air quenching cooler 3 (i.e., pyroprocessed product cooling means) is returned to the air quenching cooler 3. This makes it possible to keep the gas balance in the cement production process, and thereby stable operation is realized.

A part of the pyro-process equipment exhaust gas line 9 downstream of the dust collector 94 and upstream of the exhaust fan 95 (or the chimney 96) may be connected to the drying gas supply line 61, and exhaust gas with a temperature of lower than 200°C from the raw meal mill 93, which utilizes the exhaust gas from the cement pyro-process equipment 2, may be supplied to the dryer 6 through the drying gas supply line 61.

The mixture dried in the dryer 6 is discharged from the bottom of the drying chamber, and supplied to the precalciner 22 through the mixture supply line 8. The mixture supply line 8 includes: transporting equipment 81 and transporting equipment 82, which transport the dried mixture out of the dryer 6; a mixture hopper 83, which temporarily stores the mixture therein; and a transporting line 84, which transports the mixture that is quantitatively discharged from the mixture hopper 83. The mixture supplied to the precalciner 22 through the mixture supply line 8 is used as part of the fuel, and also, combustion ash of the mixture is used as part of the cement raw meal.

Exhaust gas from the dryer 6 is supplied to the air quenching cooler 3 through the dryer exhaust gas line 7. The dryer exhaust gas line 7 is provided with a dust collector 71, an exhaust fan 72, and an air feeding fan 74, which are arranged in this order from the upstream side to the downstream side of the flow of the dryer exhaust gas. The dryer exhaust gas discharged from the dryer 6 by the exhaust fan 72 is fed to the dust collector 71, in which powder dust is removed from the dryer exhaust gas. The removed powder dust is fed from the dust collector 71 to the mixture hopper 83, and then fed to the precalciner 22 together with the mixture stored in the mixture hopper 83. The dryer exhaust gas that has passed through the dust collector 71 is fed to the air quenching cooler 3 by the air feeding fan 74. The dryer exhaust gas thus supplied to the air quenching cooler 3 is used as part of cooling gas for cooling the pyroprocessed product. The temperature of the pyroprocessed product at the inlet of the air quenching cooler 3 is about 1400°C, which is sufficiently higher than the pyrolysis temperature (about 650°C) of the odor contained in the dryer exhaust gas. As a result of the high-temperature pyroprocessed product and the dryer exhaust gas coming into contact with each other, the odor of the dryer exhaust gas is pyrolyzed. Since the exhaust gas from the air quenching cooler 3 is fed to the rotary kiln 23 and the precalciner 22, the odor remaining in the exhaust gas from the air quenching cooler 3 is also pyrolyzed in the rotary kiln 23 and the precalciner 22.

As described above, the cement production system 100A according to the present embodiment includes: the cement pyro-process equipment 2, which pyroprocesses cement raw meal; the air quenching cooler 3, which cools a pyroprocessed product exiting from the cement pyro-process equipment 2; the mixing equipment 5, which prepares a mixture by mixing dehydrated sludge and the cement raw meal that has not been pyroprocessed; the dryer 6, which brings the mixture into contact with drying gas to dry the mixture; the drying gas supply line 61, which supplies the drying gas to the dryer 6, the drying gas being either exhaust gas from at least one of the cement pyro-process equipment 2 and the air quenching cooler 3 or exhaust gas from an apparatus that utilizes heat thereof, the drying gas having a temperature of not lower than 50°C but lower than 200°C; the mixture supply line 8, which supplies the dried mixture to the cement pyro-process equipment 2 as a fuel and raw meal; and the dryer exhaust gas line 7, which supplies exhaust gas from the dryer 6 to the air quenching cooler 3 as cooling gas for cooling the pyroprocessed product.

Also, the sludge treatment method performed by the cement production system 100A according to the present embodiment includes: preparing a mixture by mixing dehydrated sludge and cement raw meal; drying the mixture by the dryer 6, which brings the mixture into contact with drying gas; supplying the dried mixture to the pyroprocessing step of the cement production process as a fuel and raw meal; supplying exhaust gas from the dryer 6 to the pyroprocessing step as cooling gas for cooling a pyroprocessed product; and supplying the drying gas to the dryer 6, the drying gas being either exhaust gas from the cement production process or exhaust gas from a process that utilizes heat thereof, the drying gas having a temperature of not lower than 50°C but lower than 200°C. The drying gas contains either the cooling gas that has been used for cooling the pyroprocessed product or the exhaust gas from the process that utilizes the heat thereof.

According to the above cement production system 100A and sludge treatment method, the dehydrated sludge is mixed with the cement raw meal to form the mixture. As a result, the drying gas and the mixture come into contact with each other efficiently, and even with the use of the low-temperature drying gas having a temperature of not lower than 50°C but lower than 200°C, the dehydrated sludge (the mixture containing the dehydrated sludge) can be dried favorably.

Moreover, according to the above cement production system 100A and sludge treatment method, the odorous exhaust gas from the dryer 6 (dryer exhaust gas) is used in the air quenching cooler 3 as the cooling gas for cooling the pyroprocessed product. After cooling the pyroprocessed product, the dryer exhaust gas is further used as combustion air in the cement pyro-process equipment 2. As a result, the odor of the dryer exhaust gas is pyrolyzed. Therefore, it is not necessary to install a separate deodorizing device for treating the odorous dryer exhaust gas.

Furthermore, according to the above cement production system 100A and sludge treatment method, the drying gas is in the temperature condition of not higher than the ignition point of sulfur compounds that are generated from the sludge during the drying. This makes it possible to suppress the generation of sulfur dioxide (sulfurous acid gas) during the drying. Consequently, corrosion of the dryer 6 and its exhaust gas line (dryer exhaust gas line 7) due to sulfuric acid, which is generated as a result of oxidization and condensation of sulfur dioxide, can be suppressed. Similarly, owing to the aforementioned temperature condition of the drying gas, corrosion of the dryer and its exhaust gas line due to hydrogen sulfide, which is generated from the sludge, can be suppressed. For these reasons, the specifications of the dryer exhaust gas line 7 can be determined without taking corrosion resistance into consideration, which makes it possible to reduce the cost of the facility.

Still further, according to the above cement production system 100A and sludge treatment method, the mixture can be dried at a low temperature of lower than 200°C. This makes it possbile to suppress decarboxylation reactions of limestone contained in the mixture, and as a result, coating trouble due to re-carbonation and re-hydroxylation of quicklime can be suppressed.

### [Variations]

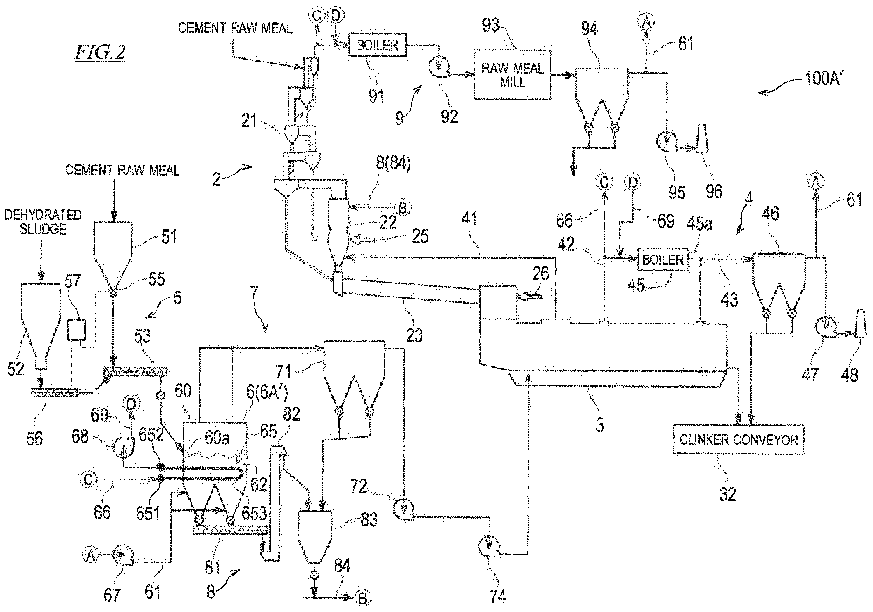

Hereinafter, variations of the cement production system 100A according to Embodiment 1 are described. FIG. 2 shows a cement production system 100A' according to one variation. The cement production system 100A' is different from the cement production system 100A according to Embodiment 1 in that the cement production system 100A' additionally includes a structure for taking high-temperature gas having a temperature of not lower than 200°C and not higher than 400°C (desirably not lower than 300°C and not higher than 400°C) from the cement production process and using the heat of the high-temperature gas in the dryer 6. Therefore, in the present variation, the same components as, or similar components to, those previously described in Embodiment 1 are denoted in the drawing by the same reference signs as those used in Embodiment 1, and the description of such components is omitted.

In the cement production system 100A' shown in FIG. 2, the dryer 6 (6A') includes an auxiliary heater 65, which indirectly heats the mixture serving as a fluidized medium. The auxiliary heater 65 includes: at least one heat transfer pipe 653, which extends through the inside of the mixture bed 62; an inlet header 651 connected to the beginning end of the heat transfer pipe 653; and an outlet header 652 connected to the termination end of the heat transfer pipe 653. In the present variation, a plurality of heat transfer pipes 653 are arranged in the depth direction of the drawing of FIG. 2, and the plurality of heat transfer pipes 653 are connected to one inlet header 651 and one outlet header 652. The plurality of heat transfer pipes 653 may be arranged sparsely over the entire mixture bed 62. Alternatively, the plurality of heat transfer pipes 653 may be arranged such that they are concentrated below and around a mixture inlet chute 60a of the dryer casing 60. Further alternatively, the plurality of heat transfer pipes 653 may be arranged such that a larger number of heat transfer pipes 653 are present at positions below and around the mixture inlet chute 60a than at the other positions. The moisture content of the mixture that has just been fed through the inlet chute 60a is higher than the moisture content of the mixture that is present in the other parts of the mixture bed 62. Therefore, if the moisture content of the mixture that has just been fed through the inlet chute 60a is excessively high, there is a risk that the fluidity of the mixture bed 62 may become impaired. In this respect, if the plurality of heat transfer pipes 653 are arranged such that they are concentrated below and around the mixture inlet chute 60a as mentioned above, the mixture that has just been fed through the inlet chute 60a is dried quickly, and thereby adhesion of the mixture is suppressed, which contributes to keeping the fluidity of the mixture bed 62.

A high-temperature gas supply line 66 is connected to the inlet header 651. The upstream end of the high-temperature gas supply line 66 is connected to the high-temperature exhaust heat line 42. The high-temperature exhaust heat line 42 is a line of piping that extracts, from the air quenching cooler 3, the gas that has been used for cooling the pyroprocessed product, the gas having a temperature of not lower than 200°C and not higher than 400°C (hereinafter, "high-temperature gas"), and feeds the extracted high-temperature gas to the boiler 45 (exhaust heat recovery steam generator).

Part or the entirety of the high-temperature gas that has flowed from the air quenching cooler 3 into the high-temperature exhaust heat line 42 flows into the high-temperature gas supply line 66, and the remaining part of the high-temperature gas flows into the boiler 45. The high-temperature gas flowing through the high-temperature gas supply line 66 flows into the heat transfer pipe 653. While passing through the heat transfer pipe 653, the high-temperature gas exchanges heat with the mixture bed 62, thereby heating the mixture bed 62.

An exhaust heat recovery line 69 is connected to the outlet header 652. The exhaust heat recovery line 69 is provided with a flow regulator 68, such as a damper or a fan. Of the high-temperature gas flowing through the high-temperature exhaust heat line 42, the flow rate of the high-temperature gas flowing into the high-temperature gas supply line 66 can be regulated by the flow regulator 68. By regulating the flow rate of the high-temperature gas flowing into the high-temperature gas supply line 66, the degree of heating of the mixture bed 62 can be adjusted.

The downstream end of the exhaust heat recovery line 69 is connected to the high-temperature exhaust heat line 42 at a position that is upstream of the boiler 45 and downstream of a connection point where the high-temperature exhaust heat line 42 and the high-temperature gas supply line 66 are connected. That is, the high-temperature gas that has flowed from the high-temperature exhaust heat line 42 into the high-temperature gas supply line 66 and has been used for heating the mixture in the dryer 6A' is returned to the high-temperature exhaust heat line 42 through the exhaust heat recovery line 69. The temperature of the high-temperature gas that has been returned to the high-temperature exhaust heat line 42 is lower than the temperature of the high-temperature gas that has just flowed into the high-temperature exhaust heat line 42. However, the heat of the high-temperature gas that has been returned to the high-temperature exhaust heat line 42 is still worth recovering by the boiler 45. For example, the high-temperature gas that has flowed into the high-temperature gas supply line 66, the high-temperature gas having a temperature of not lower than 200°C and not higher than 400°C, passes through the heat transfer pipe 653, and thereby the temperature of the high-temperature gas decreases. Thereafter, the temperature of the high-temperature gas is not lower than the temperature of the drying gas and not higher than 350°C. As thus described, the high-temperature gas that has flowed into the high-temperature gas supply line 66, which is branched off from the high-temperature exhaust heat line 42, is returned to the high-temperature exhaust heat line 42. In this case, decrease in the amount of heat recovered by the boiler 45 (i.e., decrease in the amount of electric power generated by the boiler 45) can be reduced compared to a case where the high-temperature gas is released to the atmosphere after being used in the dryer 6A', and also, the heat of the high-temperature gas can be utilized efficiently.

As described above, the cement production system 100A' according to the present variation is configured such that the previously described cement production system 100A according to Embodiment 1 includes, instead of the dryer 6 (fluidized bed dryer 6A), the fluidized bed dryer 6A' including the following components: the dryer casing 60, which accommodates the fluidized medium made of the mixture and to which the drying gas supply line 61 is connected, the drying gas supply line 61 feeding the drying gas as fluidizing gas into the fluidized medium; and at least one heat transfer pipe 653, which extends through the inside of the fluidized medium. The cement production system 100A' further includes the high-temperature gas supply line 66, which extracts the high-temperature gas having a temperature of not lower than 200°C and not higher than 400°C from the air quenching cooler 3 and feeds the extracted high-temperature gas to the heat transfer pipe 653.

In the cement production system 100A' according to the present variation, the high-temperature gas is taken out of the air quenching cooler 3. However, as an alternative, the high-temperature gas having a temperature of not lower than 200°C and not higher than 400°C may be extracted from the pyro-process equipment exhaust gas line 9, throuh which the exhaust gas from the cement pyro-process equipment 2 passes, and the extracted high-temperature gas may be fed to the heat transfer pipe 653. That is, the high-temperature gas supply line 66 may be configured to extract the high-temperature gas having a temperature of not lower than 200°C and not higher than 400°C from at least one of the pyro-process equipment exhaust gas line 9 and the air quenching cooler 3, and feed the extracted high-temperature gas to the heat transfer pipe 653. In the case of extracting the high-temperature gas from the pyro-process equipment exhaust gas line 9, the high-temperature gas may be extracted at a position that is upstream of the boiler 91 in the flow of the exhaust gas (as indicated by arrow C in the drawing). Also, the high-temperature gas that has been used for heating the mixture in the dryer 6A' may be returned through the exhaust heat recovery line 69 to a poisiton upstream of the boiler 91 in the flow of the exhaust gas (as indicated by arrow D in the drawing).

The sludge treatment method according to the present variation is configured such that the previously described sludge treatment method according to Embodiment 1 further includes: extracting the high-temperature gas having a temperature of not lower than 200°C and not higher than 400°C from the pyroprocessing step of the cement production process; and indirectly heating the fluidized medium (the mixture) in the fluidized bed dryer 6A' by using the extracted high-temperature gas.

According to the above cement production system 100A' and sludge treatment method, the fluidized medium (the mixture) in the dryer 6A' can be indirectly heated by using the high-temperature gas taken out of the pyroprocessing step of the cement production process, the high-temperature gas having a temperature of not lower than 200°C and not higher than 400°C. The term "indirectly heated" herein does not mean bringing the fluidized medium and the high-temperature gas into direct contact with each other to cause heat exchange therebetween, but means causing the fluidized medium and the high-temperature gas to exchange heat with each other via the heat transfer pipe 653. In this manner, the drying of the fluidized medium by using the fluidizing gas having a relatively low temperature (not lower than 50°C but lower than 200°C) can be assisted. Moreover, since the high-temperature gas having a temperature of not lower than 200°C and not higher than 400°C is not mixed with the fluidizing gas having the lower temperature (not lower than 50°C but lower than 200°C), decrease in the temperature of the high-temperature gas after being used for heating the fluidized medium can be reduced, which makes it possible to recover more heat from the high-temperature gas. Furthremore, the degree of the heating, and the area to be heated, can be adjusted by adjusting the arragement of the heat transfer pipe(s) 653 and the number of heat transfer pipes 653 to be installed. This makes it possible to locally compensate for insufficiency in the amount of heat in a region where the amount of heat becomes locally insufficient, such as the vicinity of the inlet chute of the dryer 6A'. Still further, the use of the high-temperature gas in the dryer 6A' does not cause a change in the amount of gas flowing from the dryer 6A' through the dryer exhaust gas line 7 into the air quenching cooler 3. This makes it possible to reduce an influence on the gas balance in the cement production system 100A', for example, in the air quenching cooler 3.

The cement production system 100A' according to the present variation further includes: the exhaust heat recovery steam generator 45; and the exhaust heat recovery line 69, which feeds the high-temperature gas exiting from the heat transfer pipe 653 to the drying gas supply line 61 through the exhaust heat recovery steam generator 45.

Similarly, the sludge treatment method according to the present variation further includes causing the high-temperature gas that has been used in the fluidized bed dryer 6A' to pass through the exhaust heat recovery steam generator 45 and then merge with the drying gas.

According to the above cement production system 100A' and sludge treatment method, the heat of the high-temperature gas that has been used for heating the fluidized medium in the fluidized bed dryer 6A' and discharged from the dryer 6A' can be recovered by the exhaust heat recovery steam generator 45. In addition, since the high-temperature gas that has passed through the exhaust heat recovery steam generator 45 is used as the drying gas, the heat of the high-temperature gas can be utilized efficiently.

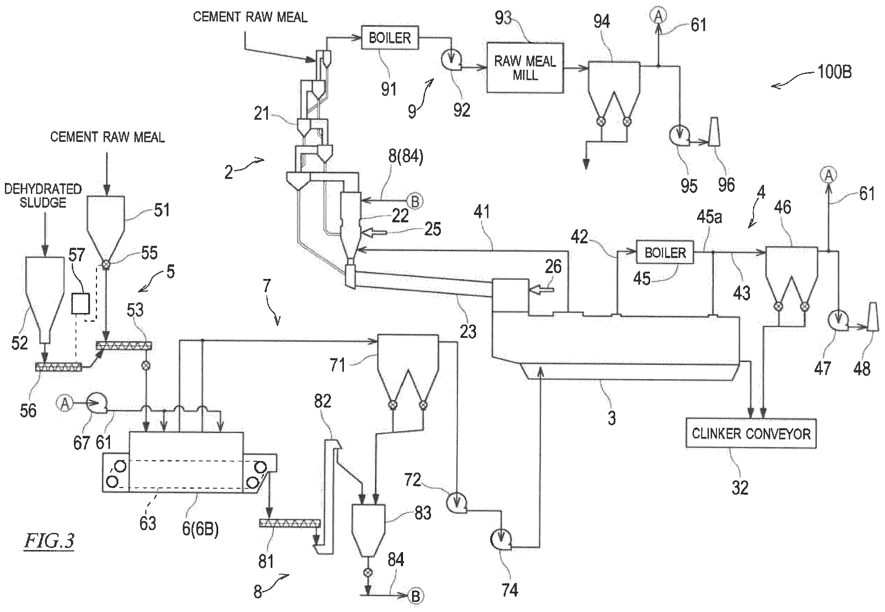

Next, an example, which does not form part of the present invention is described. FIG. 3 shows a schematic system configuration of a cement production system 100B not forming part of the present invention. The cement production system 100B has substantially the same configuration and functional advantages as those of the cement production system 100A according to Embodiment 1, except that the dryer 6 of the cement production system 100B is a conveyor-type dryer. Therefore, in the description of the present embodiment, the configuration of the dryer 6 is described in detail. The same components as, or similar components to, those previously described in Embodiment 1 are denoted in the drawing by the same reference signs as those used in Embodiment 1, and the description of such components is omitted.

The dryer 6 of the cement production system 100B shown in FIG. 3 is a conveyor-type dryer 6B, which includes a conveyor 63 in the drying chamber thereof. The dryer 6 is supplied with the drying gas through the drying gas supply line 61. The dryer 6 is also supplied with the mixture prepared by the mixing equipment 5.

In the dryer 6, the mixture is placed on the conveyor 63. The dryer 6 dries the mixture by flowing the drying gas through the mixture while moving the mixture by the conveyor 63 in the drying chamber. The dried mixture is supplied to the precalciner 22 through the mixture supply line 8. Exhaust gas from the dryer 6 is supplied to the air quenching cooler 3 through the dryer exhaust gas line 7.

Since the conveyor-type dryer 6B is adopted as the dryer 6, the mixture ratio of the dehydrated sludge and the cement raw meal in the mixing equipment 5 is such a value that the resulting mixture is free of trouble in terms of handling when conveyed by the conveyor 63. The mixture being free of trouble in terms of handling means that the mixture does not adhere much to the components of the conveyor-type dryer including the conveyor and casing. Specifically, the mixture ratio of the dehydrated sludge and the cement raw meal is determined through tests such that the total moisture content of the resulting mixture is not less than 10% by mass and not greater than 40% by mass, and more desirably not less than 10% by mass and not greater than 25% by mass. The mixture ratio thus determined is preset in the controller 57.

The present inventors have conducted tests, through which they have confirmed that if the total moisture content of the mixture is adjusted to be not less than 10% by mass and not greater than 40% by mass, the resulting mixture does not adhere much to the conveyor 63, and the mixture is free of trouble in terms of handling when conveyed by the conveyor 63. The inventors have also confirmed that if the total moisture content of the mixture is adjusted to be not less than 10% by mass and not greater than 25% by mass, the resulting mixture is granular and the adhesion of the mixture to the conveyor 63 is further reduced. In the conveyor-type dryer 6B, the dehydrated sludge and the cement raw meal are mixed together to form the mixture in such a condition, and then the mixture is dried. This makes it possible to realize continuous stable operation of the conveyor 63, and also makes it possible to suppress deterioration in the drying performance.

As described above, since the conveyor-type dryer 6B, which has higher drying efficiency (i.e., higher volumetric heat exchanger effectiveness) than other types of dryers except the fluidized bed dryer 6A, is used as the dryer 6, the mixture can be dried favorably even with the use of low-temperature drying gas.

### Reference Signs List

100A, 100B: cement production system
2: cement pyro-process equipment
3: air quenching cooler
4: cooler exhaust heat line
5: mixing equipment
6: dryer
6A, 6A': fluidized bed dryer
6B: conveyor-type dryer
7: dryer exhaust gas line
8: mixture supply line
9: pyro-process equipment exhaust gas line
21: preheater
22: precalciner
23: rotary kiln
25: precalciner burner
26: kiln burner
32: clinker conveyor
41: tertiary air duct
42: high-temperature exhaust heat line
43: low-temperature exhaust heat line
45: boiler
45a: exhaust gas line
46: dust collector
47: exhaust fan
48: chimney
51: cement raw meal hopper
52: dehydrated sludge hopper
53: mixer
55: cement raw meal adjusting feeder
56: sludge adjusting feeder
57: controller
60: dryer casing
61: drying gas supply line
62: mixture bed
63: conveyor
65: auxiliary heater
653: heat transfer pipe
66: high-temperature gas supply line
67, 68: flow regulator
69: exhaust heat recovery line
71: dust collector
72: exhaust fan
74: air feeding fan
81: transporting equipment
82: transporting equipment
83: mixture hopper
84: transporting line
91: boiler
92: exhaust fan
93: raw meal mill
94: dust collector
95: exhaust fan
96: chimney

## Claims

1. A sludge treatment method comprising:
preparing a granular mixture by mixing dehydrated sludge and cement raw meal, the mixture having a total moisture content of not less than 10% by mass and not greater than 25% by mass;
accommodating a fluidized medium made of the mixture in a dryer casing (60) and feeding drying gas as fluidizing gas into the fluidized medium;
drying the mixture by a fluidized bed dryer (6; 6A; 6B; 6A') by bringing the mixture into contact with the drying gas;
supplying the dried mixture to a pyroprocessing step of a cement production process as a fuel and raw meal;
supplying exhaust gas from the dryer (6; 6A; 6A') to the pyroprocessing step as cooling gas for cooling a pyroprocessed product; and
supplying the drying gas to the dryer (6; 6A; 6A'), the drying gas being either exhaust gas from the cement production process or exhaust gas from a process that utilizes heat thereof, the drying gas having a temperature of not lower than 50°C but lower than 200°C.

2. The sludge treatment method according to claim 1, wherein
the drying gas is either the cooling gas that has been used for cooling the pyroprocessed product or the exhaust gas from the process that utilizes the heat thereof.

3. The sludge treatment method according to claim 1 or 2, wherein
the sludge treatment method further comprises:
extracting high-temperature gas having a temperature of not lower than 200°C and not higher than 400°C from the pyroprocessing step of the cement production process; and
indirectly heating the fluidized medium in the dryer (6A; 6A') by using the extracted high-temperature gas.

4. The sludge treatment method according to claim 3, further comprising causing the high-temperature gas that has been used for heating the fluidized medium in the dryer (6A; 6A') to pass through an exhaust heat recovery steam generator and then merge with the drying gas.

5. A cement production system (100A; 100A') comprising:
cement pyro-process equipment (2) that pyroprocesses cement raw meal;
an air quenching cooler (3) that cools a pyroprocessed product exiting from the cement pyro-process equipment (2);
mixing equipment (5) configured to prepare a granular mixture by mixing dehydrated sludge and the cement raw meal that has not been pyroprocessed, the mixture having a total moisture content of not less than 10% by mass and not greater than 25% by mass;
a fluidized bed dryer (6; 6A; 6A') including a dryer casing (60) that accommodates a fluidized medium made of the mixture and to which drying gas as fluidizing gas is fed into the fluidized medium, the dryer being configured to bring the mixture into contact with the drying gas to dry the mixture;
a drying gas supply line (61) that supplies the drying gas to the dryer (6; 6A; 6A'), the drying gas being either exhaust gas from at least one of the cement pyro-process equipment (2) and the air quenching cooler (3) or exhaust gas from an apparatus that utilizes heat thereof, the system being configured so that the drying gas having a temperature of not lower than 50°C but lower than 200°C;
a mixture supply line (8) that supplies the dried mixture to the cement pyro-process equipment (2) as a fuel and raw meal; and
a dryer exhaust gas line (7) that supplies exhaust gas from the dryer (6; 6A; 6A') to the air quenching cooler (3) as cooling gas for cooling the pyroprocessed product.

6. The cement production system (100A; 100A') according to claim 5, wherein
the dryer (6; 6A; 6A') includes at least one heat transfer pipe (65) that extends through an inside of the fluidized medium, and
the cement production system further comprises a high-temperature gas supply line (66) configured to extract high-temperature gas having a temperature of not lower than 200°C and not higher than 400°C from at least one of an exhaust gas line (9) of the cement pyro-process equipment (2) and the air quenching cooler (3) and to feed the extracted high-temperature gas to the heat transfer pipe (65).

7. The cement production system (100A; 100A') according to claim 6, further comprising:
an exhaust heat recovery steam generator (45); and
an exhaust heat recovery line (69) that feeds the high-temperature gas exiting from the heat transfer pipe (65) to the drying gas supply line (61) through the exhaust heat recovery steam generator (45).

## Patentansprüche

1. Schlammbehandlungsverfahren, das Folgendes umfasst:
Vorbereiten einer körnigen Mischung durch Mischen von entwässertem Schlamm und Zementrohmehl, wobei die Mischung einen Gesamtfeuchtigkeitsgehalt von nicht weniger als 10 Masse-% und nicht mehr als 25 Masse-% aufweist;
Aufnehmen eines aus der Mischung hergestellten fluidisierten Mediums in einem Trocknergehäuse (60) und Zuführen von Trocknungsgas als Fluidisierungsgas in das fluidisierte Medium;
Trocknen der Mischung durch einen Wirbelschichttrockner (6; 6A; 6B; 6A') durch Inkontaktbringen der Mischung mit dem Trocknungsgas;
Zuführen der getrockneten Mischung als Brennstoff und Rohmehl an einen Pyroverarbeitungsschritt eines Zementherstellungsprozesses;
Zuführen von Abgas aus dem Trockner (6; 6A; 6A') als Kühlgas zum Kühlen eines pyroverarbeiteten Produkts an den Pyroverarbeitungsschritt; und
Zuführen des Trocknungsgases an den Trockner (6; 6A; 6A'), wobei das Trocknungsgas entweder Abgas aus dem Zementherstellungsprozess oder Abgas aus einem Prozess ist, der dessen Wärme nutzt, wobei das Trocknungsgas eine Temperatur von nicht weniger als 50 °C, aber weniger als 200 °C aufweist.

2. Schlammbehandlungsverfahren nach Anspruch 1, wobei das Trocknungsgas entweder das Kühlgas ist, das zum Kühlen des pyroverarbeiteten Produkts verwendet wurde, oder das Abgas aus dem Prozess, der dessen Wärme nutzt.

3. Schlammbehandlungsverfahren nach Anspruch 1 oder 2, wobei das Schlammbehandlungsverfahren ferner Folgendes umfasst:
Extrahieren von Hochtemperaturgas mit einer Temperatur von nicht weniger als 200 °C und nicht mehr als 400 °C aus dem Pyroverarbeitungsschritt des Zementherstellungsprozesses; und
indirektes Erhitzen des fluidisierten Mediums in dem Trockner (6A; 6A') unter Verwendung des extrahierten Hochtemperaturgases.

4. Schlammbehandlungsverfahren nach Anspruch 3, ferner umfassend das Bewirken, dass das Hochtemperaturgas, das zum Erhitzen des fluidisierten Mediums in dem Trockner (6A; 6A') verwendet wurde, durch einen Abwärmerückgewinnungsdampferzeuger strömt und sich dann mit dem Trocknungsgas vermischt.

5. Zementherstellungssystem (100A; 100A'), das Folgendes umfasst:
eine Zementpyroprozessanlage (2), die Zementrohmehl pyroverarbeitet;
einen Luftabschreckkühler (3), der ein pyroverarbeitetes Produkt kühlt, das aus der Zementpyroprozessanlage (2) austritt;
eine Mischanlage (5), die zum Vorbereiten einer körnigen Mischung durch Mischen von entwässertem Schlamm und dem nicht pyroverarbeiteten Zementrohmehl ausgelegt ist, wobei die Mischung einen Gesamtfeuchtigkeitsgehalt von nicht weniger als 10 Masse-% und nicht mehr als 25 Masse-% aufweist;
einen Wirbelschichttrockner (6; 6A; 6A') mit einem Trocknergehäuse (60), das ein aus der Mischung hergestelltes fluidisiertes Medium aufnimmt und an den Trocknungsgas als Fluidisierungsgas in das fluidisierte Medium zugeführt wird, wobei der Trockner so ausgelegt ist, dass er die Mischung mit dem Trocknungsgas in Kontakt bringt, um die Mischung zu trocknen;
eine Trocknungsgaszufuhrleitung (61), die das Trocknungsgas an den Trockner (6; 6A; 6A') zuführt, wobei es sich bei dem Trocknungsgas entweder um Abgas aus der Zementpyroprozessanlage (2) und/oder dem Luftabschreckkühler (3) oder um Abgas aus einer Vorrichtung handelt, die deren Wärme nutzt, wobei das System so ausgelegt ist, dass das Trocknungsgas eine Temperatur von nicht weniger als 50 °C, aber weniger als 200 °C aufweist;
eine Mischungszufuhrleitung (8), die die getrocknete Mischung als Brennstoff und Rohmehl an die Zementpyroprozessanlage (2) zuführt; und
eine Trocknerabgasleitung (7), die Abgas aus dem Trockner (6; 6A; 6A') als Kühlgas zum Kühlen des pyroverarbeiteten Produkts an den Luftabschreckkühler (3) zuführt.

6. Zementherstellungssystem (100A; 100A') nach Anspruch 5, wobei:
der Trockner (6; 6A; 6A') mindestens ein Wärmeübertragungsrohr (65) umfasst, das sich durch ein Inneres des fluidisierten Mediums erstreckt, und
das Zementherstellungssystem ferner eine Hochtemperaturgaszufuhrleitung (66) umfasst, die dazu ausgelegt ist, Hochtemperaturgas mit einer Temperatur von nicht weniger als 200 °C und nicht mehr als 400 °C aus einer Abgasleitung (9) der Zementpyroprozessanlage (2) und/oder des Luftabschreckkühlers (3) zu extrahieren und das extrahierte Hochtemperaturgas an das Wärmeübertragungsrohr (65) zuzuführen.

7. Zementherstellungssystem (100A; 100A') nach Anspruch 6, das ferner Folgendes umfasst:
einen Abwärmerückgewinnungsdampferzeuger (45); und
eine Abgaswärmerückgewinnungsleitung (69), die das aus dem Wärmeübertragungsrohr (65) austretende Hochtemperaturgas über den Abwärmerückgewinnungsdampferzeuger (45) an die Trocknungsgaszufuhrleitung (61) zuführt.

## Revendications

1. Procédé de traitement de boues comprenant :
la préparation d'un mélange granulaire par mélange de boues déshydratées et de farine crue de ciment, le mélange ayant une teneur en humidité totale non inférieure à 10 % en masse et non supérieure à 25 % en masse ;
l'introduction d'un milieu fluidisé composé dudit mélange dans une enveloppe de séchoir (60) et l'apport de gaz de séchage, servant de gaz de fluidisation, dans ledit milieu fluidisé ;
le séchage du mélange par un séchoir à lit fluidisé (6 ; 6A ; 6B : 6A') par mise en contact du mélange avec le gaz de séchage ;
l'apport du mélangé séché, servant de combustible et de farine crue, à une étape de pyrotraitement d'un process de production de ciment ;
l'apport de gaz d'échappement issu du séchoir (6 ; 6A ; 6A'), servant de gaz de refroidissement pour le produit pyrotraité, à ladite étape de pyrotraitement ; et
l'apport du gaz de séchage au séchoir (6 ; 6A ; 6A'), le gaz de séchage étant soit du gaz d'échappement issu du process de production de ciment, soit du gaz d'échappement issu d'un process exploitant sa chaleur, le gaz de séchage ayant une température non inférieure à 50 °C mais inférieure à 200 °C.

2. Procédé de traitement de boues selon la revendication 1, dans lequel le gaz de séchage est soit le gaz de refroidissement ayant servi à refroidir le produit pyrotraité, soit le gaz d'échappement issu du process exploitant sa chaleur.

3. Procédé de traitement de boues selon la revendication 1 ou 2, comprenant en outre :
l'extraction de gaz à haute température, dont la température est non inférieure à 200 °C et non supérieure à 400 °C, de l'étape de pyrotraitement du process de production de ciment, et
le chauffage indirect du milieu fluidisé dans le séchoir (6A ; 6A') au moyen dudit gaz à haute température extrait.

4. Procédé de traitement de boues selon la revendication 3, dans lequel en outre le gaz à haute température ayant servi à chauffer le milieu fluidisé dans le séchoir (6A ; 6A') est amené à traverser un générateur de vapeur à récupération de chaleur d'échappement puis à rejoindre le gaz de séchage.

5. Système de production de ciment (100A ; 100A') comprenant :
un équipement de pyrotraitement de ciment (2) effectuant le pyrotraitement de la farine crue de ciment ;
un refroidisseur à air (3) qui refroidit le produit pyrotraité sortant de l'équipement de pyrotraitement de ciment (2) ;
un équipement de mélange (5) conçu pour préparer un mélange granulaire par mélange de boues déshydratées et de farine crue de ciment non encore pyrotraitée, le mélange ayant une teneur en humidité totale non inférieure à 10 % en masse et non supérieure à 25 % en masse ;
un séchoir à lit fluidisé (6 ; 6A ; 6A') comportant une enveloppe de séchoir (60) dans laquelle est introduit un milieu fluidisé composé du mélange et dans laquelle un gaz de séchage servant de gaz de fluidisation est apporté au milieu fluidisé, le séchoir étant conçu pour mettre le mélange en contact avec le gaz de séchage afin de sécher ledit mélange ;
une conduite d'amenée de gaz de séchage (61) permettant l'apport de gaz de séchage au séchoir (6 ; 6A ; 6A'), le gaz de séchage étant soit du gaz d'échappement issu de l'équipement de pyrotraitement de ciment (2) et/ou du refroidisseur à air (3), soit du gaz d'échappement issu d'un dispositif exploitant sa chaleur, le système étant conçu pour que le gaz de séchage ait une température non inférieure à 50 °C mais inférieure à 200 °C ;
une conduite d'amenée de mélange (8) permettant l'apport de mélange séché, servant de combustible et de farine crue, à l'équipement de pyrotraitement de ciment (2) ; et
une conduite de gaz d'échappement de séchoir (7) permettant l'apport de gaz d'échappement issu du séchoir (6 ; 6A ; 6A'), servant de gaz de refroidissement pour le produit pyrotraité, au refroidisseur à air (3).

6. Système de production de ciment (100A ; 100A') selon la revendication 5, dans lequel :
le séchoir (6 ; 6A ; 6A') présente au moins un tuyau de transfert de chaleur (65) traversant l'intérieur du milieu fluidisé, et
le système de production de ciment comprend en outre une conduite d'amenée de gaz à haute température (66) conçue pour extraire du gaz à haute température dont la température est non inférieure à 200 °C et non supérieure à 400 °C d'une conduite de gaz d'échappement (9) appartenant à l'équipement de pyrotraitement de ciment (2) et/ou du refroidisseur à air (3) et pour apporter le gaz à haute température extrait au tuyau de transfert de chaleur (65).

7. Système de production de ciment (100A ; 100A') selon la revendication 6, comprenant en outre :
un générateur de vapeur à récupération de chaleur d'échappement (45), et
une conduite de récupération de chaleur d'échappement (69) qui apporte le gaz à haute température sortant du tuyau de transfert de chaleur (65) à la conduite d'amenée de gaz de séchage (61) par l'intermédiaire du générateur de vapeur à récupération de chaleur d'échappement (45).
